(19) Europäisches Patentamt
European Patent Office
Office européen des brevets

(11) Publication number: **0 322 959 A2**

# (12) EUROPEAN PATENT APPLICATION

(21) Application number: 88202924.2

(22) Date of filing: 16.12.88

(51) Int. Cl.4: C08K 7/04, C08L 73/00, C08J 5/04

(30) Priority: 24.12.87 US 137688
24.12.87 US 137800
25.11.88 GB 8827400

(43) Date of publication of application:
05.07.89 Bulletin 89/27

(84) Designated Contracting States:
AT BE CH DE ES FR GB GR IT LI NL SE

(71) Applicant: SHELL INTERNATIONALE RESEARCH MAATSCHAPPIJ B.V.
Carel van Bylandtlaan 30
NL-2596 HR Den Haag(NL)

(72) Inventor: George, Eric Richard
13703 Overbrook Lane
Houston Texas 77077(US)

(74) Representative: Aalbers, Onno et al
P.O. Box 302
NL-2501 CH The Hague(NL)

## (54) Fibre reinforced thermoplastic composites.

(57) Fibre reinforced thermoplastic composites comprising a linear alternating polymer of at least one olefinically unsaturated compound and carbon monoxide, and an inorganic fibrous reinforcement. A process for their preparation is claimed too.

EP 0 322 959 A2

# FIBRE REINFORCED THERMOPLASTIC COMPOSITES

The present invention relates to fibre reinforced thermoplastic composites and to a process for their preparation. More in particular the invention relates to such composites based on linear alternating polyketone polymers reinforced with inorganic fibrous materials.

Polymers of carbon monoxide and olefinically unsaturated organic compounds, or polyketones, have been known and available in limited quantities for many years. For example, polymers of ethylene or ethylene-propylene which contain small quantities of carbon monoxide are disclosed in U.S. Patent 2,495,286, prepared using free radical catalysts. British Patent 1,081,304 discloses polymers containing higher concentrations of carbon monoxide prepared using alkylphosphine complexes of palladium salts as catalysts. A special class of linear polyketones is disclosed in U.S. 3,694,412, wherein the monomer units of carbon monoxide and olefinically unsaturated hydrocarbons occur in alternating order.

Polyketones are of considerable interest because they exhibit good physical properties. In particular, the high molecular weight linear alternating polymers have potential use as engineering thermoplastics due to their high strength, rigidity and impact resistance. These polymers consist of repeating units of general formula

$$\overset{O}{\overset{\|}{-C}}(A)$$

which units may be the same or different and wherein A is the moiety obtained by polymerization of the olefinically unsaturated organic compound through the olefinic unsaturation.

Although the properties of the polyketones are suitable for many applications, it would be of advantage to provide polyketone composites which exhibit less mould shrinkage and certain mechanical properties that are improved over the corresponding properties of the polymer alone.

It has been found that a method to improve the performance of such polyketone composites is to incorporate reinforcing materials into the polyketone polymer matrix and especially inorganic fibrous reinforcements.

Accordingly, the invention concerns reinforced thermoplastic composites, characterized by comprising a linear alternating polymer of at least one olefinically unsaturated compound and carbon monoxide, and an inorganic fibrous reinforcement.

Generally the method employed for the preparation of such reinforced polyketone composites in not critical as long as it provides an intimate mixture of polymer and reinforcement. In one method the components are contacted in e.g. an extruder or an internal mixer at elevated temperature. This method however, has its limitations in that it is often only possible to employ short inorganic fibres, i.e. chopped fibres, while furthermore there often is a limit to the amount of fibres which can be incorporated, in view of viscosity constraints. Obviously the viscosity of such a polymer/fibre mixture may be reduced by raising the temperature, but too high a temperature may result in an unacceptable degree of polymer degradation. A further reason why this so-called high shear method is less preferred sometimes, is that it may also lead to fibre breakage, and that it hardly allows the preparation of composites wherein the reinforcement is present in a controllable orientated manner.

As a result of continuing and extensive research and experimentation, there was surprisingly found that it is possible to prepare the present reinforced polyketone composites in such a manner that substantially no polymer degradation or fibre breakage occurs, the viscosity of the system is not a limiting factor for the maximum ratio of fibre to polymer to be used and which method is not restricted to the use of chopped strands of inorganic fibres.

The invention also provides therefore a process for the preparation of reinforced thermoplastic composites, characterized in that an inorganic fibrous reinforcement, is contacted with a solution of a a linear alternating copolymer of at least one olefinically unsaturated compound and carbon monoxide, and that subsequently the solvent component is removed from the thus treated fibrous reinforcement.

The manner in which the fibrous reinforcement as hereinbefore described is contacted with the polymer solution in the process of the present invention may vary widely and will largely be determined by the nature and/or shape of said fibrous reinforcement. The fibrous reinforcement may conveniently be selected from the group comprising woven and non-woven fibrous reinforcements. Suitable non-woven fibrous reinforcements include continuous and chopped fibres. The inorganic fibrous reinforcements include glass,

ceramic and carbon fibre based fibrous reinforcements, or mixtures thereof, e.g. glass/ceramic fibre mixtures.

A reinforcement suitable for use in the composites of the invention is called refractory ceramic fibre, (RCF), also referred to as ceramic fibre of alumina-silica fibre. RCF is typically composed of about an equal parts blend of the oxides silica and alumina. In contrast to silicate glasses, such as E-glass or mineral fibre, RCF has only trace or slightly higher amounts of the oxides of alkali metals such as sodium, alkaline earth metals such as calcium, and oxides of other metals such as titanium, and iron. The very low amounts of alkali present in RCF provide a surface that is generally free of alkali metal ion exchange and interactions, and is inherently more resistant to moisture attack. Although there are few monovalent cations on the fibre surface, there are silanol groups (-Si-OH) on the surface which can interact to provide surface modification to a fibre/matrix interface.

Refractory ceramic fibres are conventionally prepared in a melting operation by fusing raw materials in an electric arc furnace to produce a molten stream. The molten stream is impinged on by air under high pressure or dropped on to spinning wheels which separates the stream into tiny fragments. The fragments form fibre and are rapidly cooled. Also produced in the melt process are molten droplets called "shot" which are spherical particles that do not transform into fibres. RCF can be processed to remove the shot, but typically the shot content does not significantly detract from the overall properties of the ceramic fibre. RCF is commercially available and has traditionally been used in mat or textile form in high temperature applications such as furnace insulation. The fibres are also useful as reinforcements for polymeric products and are commercially used as such. However, the physical dimensions of the ceramic fibres are of some importance to successful utilization in a particular application as are the presence or absence of a sizing material or a coupling agent for the fibres and the nature of the sizing or coupling agent.

In the polyketone/ceramic fibre composites of the invention, the ceramic fibres which contribute the most desirable properties to the composite are chopped ceramic fibres of circular cross-section. The fibres have an average diameter from about 1 micron to about 10 microns, preferably from 2 micron to 4 micron. Fibres of greater or lesser diameter are satisfactory but fibres of too small a diameter do not provide the desired strength and fibres of too large a diameter contribute too much weight for the resulting strength and may not be economical. Although in some applications the very short milled ceramic fibres or the long continuous ceramic fibres are satisfacotry, in the compositions of the invention it is preferred to use short chopped ceramic fibres. Lengths of ceramic fibre from about 0.35 mm to about 15 mm are suitable. While somewhat longer or somewhat shorter lengths are also useful, too long a ceramic fibre detracts from the processability of the composition while too short a fibre does not provide the desired strength. It is recognized that the actual length of the ceramic fibres in the compositions will depend to some extent upon the method of blending or mixing the components, as this may mechanically break down the length of the ceramic fibres.

Another suitable reinforcement is made from fibrous glass.

The term "glass" is employed in the conventional meaning to indicate that class of complex metal silicates which are commonly referred to as glasses. Although the addition of rare earth metal oxides or transition metal oxides to other metal silicates on occasion will produce a glass of rather exotic properties, the glass from which the glass fibre of the invention is preferably produced is the more common alkali metal silicate glass, particularly a sodium silicate glass. Fibres produced of such glass are conventional and are commercially available from a number of glass companies. The fibres are useful as reinforcements for polymeric products and are commercially used as such. However, the physical dimensions of the glass fibres are of some importance to successful utilization in a particular application as are the presence or absence of a sizing material or a coupling agent for the glass and the nature of the sizing or coupling agent.

In the polyketone/glass fibre compositions of the invention, the glass fibres which contribute the most desirable properties to the composition are chopped glass fibres of circular cross-section. The fibres range in diameter from about 5 micron to about 20 micron, preferably from 10 to 18 micron. Fibres of greater or lesser diameter are satisfactory but fibres of too small a diameter do not provided the desired strength and fibres of too large a diameter contribute too much weight for the resulting strength and may not be economical. Although in some applications the long continuous fibres of glass are satisfactory, in the composites of the invention it is preferred to use short fibres of glass. Lengths of glass fibre from about 2.5 to about 12.5 mm are suitable. While somewhat longer or somewhat shorter lengths are also useful, too long a glass fibre detracts from the processability of the composition while too short a fibre does not provide the desired strength. It is recognized that the actual length of the glass fibres in the composition will depend to some extent upon the method of blending or mixing the components, as this may mechanically break down the length of the glass fibres.

The inorganic fibres to be used as reinforcements for plastic materials will customarily be provided by

the manufacturer with a coating of a sizing material or a coupling agent, which terms are often used interchangeably. The nature of the sizing or coupling agent will influence the interfacial shear strength of the fibre and the polymer matrix, i.e., the degree to which the polymer and fibre will adhere. Improvement in mechanical properties, such as tensile strength, result when a relatively high degree of adhesion occurs between the polymer and the fibre. To contribute strength to a polymer blend, the interfacial shear strength will be at least comparable in magnitude to the shear strength of the polymer so that there will be good adhesion between the polymer and the fibre. The interfacial shear strength is influenced by the polarity of the polymer so that for some polymers certain sizings or coupling agents work better than others. For the case of blends containing polyketone polymers a variety of sizings are suitable. Such sizings are generally characterized by the general nature of the size rather than the specific chemical structures which are often proprietary to the glass fibre manufacturer. Suitable sizings include water emulsions of starch and lubricating oil, aqueous dispersions of surface active materials and lubricants, silicon-containing materials such as vinyl silanes, alkyltrimethoxysilanes, amino silanes, trimethoxysilanes which may also contain urethane, acrylate or epoxy functionalities, and non-polar hydrocarbons. For use in glass fibre based composites, polar sizings are preferred, such as a sizing having a trimethoxysilane end group attached to a hydrocarbon chain with a terminal urethane functionality, although other hydrocarbon sizings having a trimethoxysilane end group are also quite suitable.

A continuous inorganic fibre can conveniently be contacted with said polymer solution e.g. by guiding said fibre through the polymer solution. The fibre emerging from said polymer solution is thus provided with a solvent containing polymer coating, which solvent is removed in a subsequent solvent removal treatment. Woven fibrous reinforcements may conveniently be contacted with the polymer solution e.g. via soaking or by contacting said reinforcement and the polymer solution with the aid of one or more rollers.

The nature of the polymer solution is not critical provided it will result in an ultimate mixture with the organic fibrous reinforcement, without undue polymer degradation and/or breakage of the fibrous reinforcement occurring, which conditions can be met when the polymer solution has the correct viscosity. Typically the viscosity of the polymer solution will be in the range of from 0.5 tot 10 Pa.s at the temperature whereat the solution is contacted with the reinforcement, although higher or lower viscosities should not be excluded. Preferably the viscosity is in the range of from 1 to 4 Pa.s.

The polymer solution may be based on a single solvent or on a blend of solvents. Solvents which may advantageously be employed in the preparation of polymer solution for use in the process of the present invention include hexafluoroisopropanol, m-cresol and mixtures thereof. A number of solvents which as such may be considered to be non-solvents for the alternating copolymers as described hereinbefore, may occasionally be beneficially employed, in a minor amount, in combination with the solvents mentioned hereinbefore. Such compounds include aromatic hydrocarbons such as toluene; lower aliphatic alcohols such as methanol, ethanol and isopropanol; aliphatic hydrocarbons such as n-hexane and isooctane; ketones such as acetone and methyl ethyl ketone; and acids such as formic acid and acetic acid. Ethanol is a preferred non-solvent.

Independent of the method employed for contacting the fibrous reinforcement with the polymer solution, the obtained treated fibrous reinforcement will have to be submitted to a solvent removal treatment in order to arrive at the ultimate reinforced polymer composite.

With a number of the thus prepared solvent containing composites e.g. those having a relatively high content of reinforcement, such as the polymer solution treated continuous fibre, the solvent removal may conveniently be accomplished via evaporation of the solvent solvent fraction e.g. by passing the treated reinforcements through a shaft through which a hot, preferably inert, gas is blown. Preferably however, the solvent fraction of the treated reinforcement is removed via extraction e.g. by contacting said reinforcement with a suitable extracting agent. In the context of the present invention the term suitable extracting agent refers to a compound which is miscible with the solvent fraction of the polymer solution but is a non-solvent for the polymer. Hence any compound meeting this requirement may be used as extracting agent. Most of the non-solvents listed hereinbefore, may conveniently be employed as extracting agent. Acetone is a preferred extracting agent for use in the solvent removal treatment.

Subsequent to the solvent removal the resulting reinforced composites may if required be dried by known techniques such as treating with hot air.

The thermoplastic polymers which may be employed in the reinforced composites according to the present invention may be true copolymers of carbon monoxide and one particular olefinic compound such as an alkene of up to 12 carbon atoms, preferably ethene or an aryl substituted alkene, preferably styrene or they can be copolymers of carbon monoxide and more than one olefin e.g. ethene and propene. In the latter case ethene is preferably employed as the major olefin. The relevant alternating copolymers are known per se, for example from EP-A 121965, EP-A 213671, EP-A 229408 and US-A 3914391, likewise,

their methods of preparation by catalytic copolymerization are known from these references. Suitable polymerization catalysts are based upon palladium/phosphine systems.

Particularly suitable thermoplastic polymers to be employed in the composites of this invention are copolymers of ethene and carbon monoxide, terpolymers of ethene, propene and carbon monoxide, preferably those in which the ethylene to propylene molar ratio in the polymer chains is at least 3:1. Other terpolymers are terpolymers of ethylene and carbon monoxide with butene, pentene, hexene, heptene, octene, nonene, decene, dodecene, styrene, methyl acrylate, methyl methacrylate, vinyl acetate, undecenoic acid, undecenol, 6-chlorohexene, N-vinylpyrrolidone and the diethylester of vinyl-phosphonic acid, provided the molar ratio of ethylene to other unsaturated monomer in the polymer macromolecules is at least 3:1, preferably at least 8:1.

Especially preferred are thermoplastic polymers as described hereinbefore having a molecular weight which corresponds with a Limiting Viscosity Number at 60 °C (LVN 60) of at least 2 dl/g.

The reinforcement content of the reinforced thermoplastic composites according to the present invention may vary widely e.g. from as low as 1 to as high as 90%v, but will generable be in the range from 5 to 60%v. On a mass basis, the reinforcement content may suitably be between about 1 and 45%, based on total composition, preferably between 5 and 35%. Said reinforcement content will be determined by the method of preparation as well as by the end use.

The invention is further illustrated with the following examples.

Example 1

Preparation of a composite containing a chopped fibre reinforcement.

5 g of a terpolymer of ethylene, propene and carbon monoxide, having a propene content of 6.6%m, a LVN at 60 °C = 2.1 dl/g and a melting point of 218 °C, and 95 g of m-cresol were mechanically stirred at 20-23 °C to provide a solution having a viscosity of 1.61 Pa.s at 22 °C. Subsequently 1 g of chopped fibres (length 6 mm), which had been dried at 75 °C for 24 hours, was added to the polymer solution. Stirring was continued to fibrillate the glass fibres and obtain a homogeneous dispersion of monofilament like chopped fibres. The dispersion was transferred to a vertically positioned conical reservoir equipped with a gas inlet at the top and with a horizontal outlet tube at the narrow bottom end of the reservoir, which outlet tube had an internal diameter of 4 mm and was provided with a stopcock.

Via the gas inlet nitrogen gas was introduced into the reservoir in the space above the surface of the polymer solution in an amount sufficient to create and maintain a slight overpressure, to result in a steady flow of glass fibre-containing polymer solution when the stopcock was opened, thereby forming a continuous liquid thread of said polymer solution. When this thread was subsequently guided through the acetone-containing extraction bath, over a distance of approximately 100 cm, this resulted in a virtually solvent-free fibre containing polymer thread, and which was subsequently dried with hot air. The glass fibre content of the thus formed polymer thread like composite was 8.25% by volume, in which the fibres were more or less orientated parallel to the axis of the thread.

Example 2

Preparation of a reinforced thermoplastic composite based on a continuous glass fibre.

A polymer solution having a viscosity of 1.62 Pa.s at 22 °C was prepared by mixing 0.3 g of an ethylene/carbon monoxide copolymer, having a LVN at 60 °C = 21 dl/g and a melting point of 260 °C, and 99.7 g hexafluorisopropanol at 20-23 °C.

The equipment used for the preparation of the composite hereinbefore mentioned comprised a tapered glass capillary having a diameter of 5 mm and an opening of 0.5 mm. The capillary was placed in a vertical position above an extraction bath containing acetone. A continuous glass fibre roving was introduced into the capillary, entering it at the top and leaving the capillary at the bottom. The fibre-end emerging from the lower end of the capillary was guided via two rollers through the extraction bath over a distance of approximately 100 cm and subsequently through a shaft through which hot air was blown, to a take up reel.

The polymer solution was transferred to the capillary and with the aid of the take up reel, a glass fibre

roving, provided with a coating of polymer solution, was drawn from the capillary with a speed of approximately 10 cm/min. Upon entering the bath the solvent extraction commenced, as a result of which the coated roving leaving the bath was substantially hexafluoroisopropanol free. The coated roving, being the reinforced thermoplastic composite, was subsequently dried and collected on the take up reel.

Example 3

(a) A linear alternating terpolymer of carbon monoxide, ethene and propene, Sample A, was prepared in the presence of a catalyst formed from palladium acetate, the anion of trifluoroacetic acid, and 1,3-bis-(diphenylphosphino)propane. Sample A polymer had a melting point of 222 °C and a limiting viscosity number (LVN) of 1.76 measured at 60 °C in m-cresol. A second and third linear alternating terpolymer of carbon monoxide, ethylene and propylene, Sample B and C, were prepared in similar fashion. Sample B terpolymer had a melting point of 213 °C and an LVN of 1.46 measured at 60 °C in m-cresol. Sample C had a melting point of 220 °C and a LVN of 1.96 measured at 60 °C in m-cresol.

(b) Sample A of paragraph (a) was blended with commercially available glass fibres (GF), designated as numbers 457 and 492. These are both E type glasses having a density of about 2.60 g/cm$^3$ . The 457 glass is sized with a non-polar sizing agent designed for blending with polypropylene and the 492 glass is sized with a polar sizing agent designed for blending with polyesters. The blending was done on a 30 mm twin screw extruder. All samples were extruded into water and pelletized. Pellets were dried prior to moulding. Samples were injection moulded into standard ASTM tensile bars for testing. Modulus, flex strength and notched izod values were obtained using standard ASTM test methods. The measured values for the moulded samples are reported in Table 1. Sample B of paragraph (a) was also blended with the 457 and 492 glass fibres. The samples were extruded as for Sample A and then pelletized. The samples were injection moulded into standard ASTM tensile bars for testing. The pellets were not dried prior to moulding. The measured values for modulus, flex strength and notched izod for the moulded samples are reported in Table 2.

Tables 1 and 2 illustrate the increase of modulus with increasing glass content and the corresponding increase in flex strength with glass content for the compositions prepared with the 492 and 457 glass fibres. A comparison of the values at constant glass content in either Table 1 or 2 indicates that better properties were obtained using the 492 glass fibre. A comparison of Tables 1 and 2 also illustrates that the magnitude of the increases in mechanical properties depend not only on the glass and type of sizing used, but also on the properties of the neat polyketone. The combination of Sample A having the higher initial starting modulus with 492 glass fibres resulted in the best properties in comparison to other combinations at constant glass content.

TABLE 1

| [a]GF (%w) | [b]Modulus | [b]Flex Strength | [c]Notched Izod | |
|---|---|---|---|---|
| | | | RT | -29 °C |
| 0.0 | 1496 | 49 | 23 | 6.0 |
| 9.9* | 2096 | 71 | 11 | 4.9 |
| 18.9* | 3923 | 106 | 9.3 | 5.5 |
| 18.9** | 2758 | 83 | 8.7 | 4.9 |

a For compositions containing terpolymer sample A
b MPa
c kg
* 492 Glass Fibres (polar sizing).
** 457 Glass Fibres (non-polar sizing).

TABLE 2

| aGF (%w) | bModulus | bFlex Strength | cNotched Izod | |
|---|---|---|---|---|
| | | | RT | -29 °C |
| 0.0 | 1213 | 45 | 18 | 4.4 |
| 9.9** | 1586 | 57 | 9.3 | 4.4 |
| 18.9** | 2062 | 68 | 8.2 | 4.4 |
| 28.4** | 2696 | 76 | 9.8 | 5.5 |
| 28.4* | 3482 | 98 | 8.2 | 4.9 |

a For compositions containing terpolymer sample B
b MPa
c kg
* 492 Glass Fibres (polar sizing).
** 457 Glass Fibres (non-polar sizing).

Example 4

Terpolymer sample A from Example 3(a) was blended separately with the 457 and 492 glass fibres. The blending was done on a 3/4" single screw extruder and all samples were extruded into water and pelletized. The pellets were dried prior to moulding. Samples were injection moulded into standard ASTM tensile bars for testing. Modulus, flex strength and notched izod values were obtained using standard ASTM test methods. The moulded articles will absorb up to about 1%w of water, which will typically result in a slight decrease in modulus and a slight increase in impact strength. The heat of fusion was measured by differential scanning calorimetry (DSC) and normalized for the weight percent glass added.

A comparison of Tables 1 and 2 with Table 3 illustrates the improvement in properties observed for glass fibre reinforced compositions that are moulded on a twin screw extruder (Table 3) versus compositions that were moulded on a single screw extruder (Tables 1 and 2).

Table 3 also illustrates the increase of modulus with increasing glass content and the corresponding increase in flex strength with glass content for compositions prepared with the 492 glass. The flex strength reached more than 140 MPa at 27.0%w glass loading. This value infers good fiber-matrix adhesion.

Table 3 also shows notched izod values at room temperature (RT) and at -29 °C versus glass content for the compositions prepared with the 492 and the 457 glass. In the RT values, the impact resistance initially decreases for samples having low glass content but the reinforced compositions show a progressive increase in impact resistance with increasing glass content. The low temperature impact resistance increased with increasing glass content reaching a value of about 11 kg at 27.0%w glass. The heat of fusion versus glass content mimics the room temperature notched izod values (Table 3). The heat of fusion is directly proportional to the degree of crystallinity in polymers. The crystallinity of the compositions increased with increasing glass content which may indicate that the glass acts as a site for nucleation and growth of crystals. This crystallization enhances the adhesion and morphology of the polymer-glass interface leading to improved impact resistance. The 457 glass composites show a higher heat of fusion than equivalent composites with the 492 fibres, which indicates a higher crystallinity for the 457 compositions. Consistent with this observation is a comparison of the corresponding values in Table 3 which show that the use of 457 glass leads to higher impact resistance than 492 glass at the same loading.

TABLE 3

| aGF (%w) | bModulus | bFlex Strength | cNotched Izod | | dHeat of Fusion $H_f$ |
|---|---|---|---|---|---|
| | | | RT | -29° C | |
| 0.0 | 1418.5 | 49.93 | 24 | 6.38 | 22.1 |
| 21.0* | 3558.2 | 111.78 | 11.0 | 6.55 | 14.1 |
| 23.6* | 4705.3 | 130.73 | 17.0 | 9.33 | 16.91 |
| 27.0* | 5097.4 | 143.51 | 18.3 | 11.2 | 18.97 |
| 21.0** | 3531.4 | 105.99 | 14.3 | 7.47 | 18.88 |

a For compositions containing terpolymer sample A
b MPa
c kg
d cal/g
* 492 Glass Fibres (polar sizing).
** 457 Glass Fibres (non-polar sizing).

Example 5

Terpolymer Sample A of Example 3(a) was blended separately with 10% by volume of 457 and 492 glass fibres using a 30 mm twin screw extruder. The compositions were pelletized, dried and moulded on a 57 gram injection molder into standard ASTM tensile bars to measure their respective mould shrinkage. A neat sample of the terpolymer of Example 3(a) was also injection moulded as a control. The results of the mould shrinkage measurements are shown in Table 4. The mould shrinkage is significantly decreased upon the addition of the glass fibres. The composites containing the 492 glass showed less mould shrinkage than the 457 glass composition, which is consistent with the higher heat of fusion (higher crystallinity of the compositions) containing the 457 glass.

TABLE 4

| % Polymer | Glass Fibres (% volume) | % Mould Shrinkage |
|---|---|---|
| 100 | -- | 2.9 |
| 90 | 10[a] | 1.75 |
| 90 | 10[b] | 1.02 |

a 457 Glass Fibres (non-polar sizing).
b 492 Glass Fibres (polar sizing).

Example 6

The terpolymer C of Example 3(a) was blended with commercially available ceramic fibres, designated with number 6000. It is a refractory ceramic fibre having a fibre length about 13 mm, a mean fibre diamter of 2-3 microns and a specific gravity of 2.73 g/cc. The ceramic fibres are sized with a commercial sizing designed for use with phenolic, epoxy, nylon, melamine and polyurethane systems. The components were extruded into water and pelletized. A sample of the terpolymer without ceramic fibres was also extruded and pelletized as a control. Samples were injection moulded into standard ASTM tensile bars for testing. The pellets were dried prior to moulding. Flex modulus and notched izod were measured by standard ASTM methods. The values for the terpolymer control and the reinforced composition are given in Table 5. The ceramic fibre reinforced composition showed a substantial increase in flex modulus over the non-reinforced sample.

TABLE 5

| Sample | 6000 (%) | Notched Izod (kg) | | Flex Modulus (MPa) |
|---|---|---|---|---|
| | | Room Temperature | -29 °C | |
| Control | -- | 26 | 6.5 | 1655 |
| A | 5 | 14 | | 2220 |

Example 7

The terpolymer C of Example 3(a) was blended with 10% by weight of the 6000 ceramic fibres. A sample of the terpolymer was also blended with 10% by weight of the 492 chopped glass fibres.

The components were blended using a 30 mm twin screw extruder. The blends were extruded into water and pelletized and then re-extruded a second time and pelletized again. A sample of the terpolymer was extruded and pelletized twice also as a control.

Pellets of the terpolymer sample without reinforcement were injection moulded to prepare standard ASTM tensile bars. Cycle times for the injection moulding were about 10-20 seconds. Pellets of the 10% by weight ceramic reinforced terpolymer were also injection moulded to prepared standard tensile bars. The ceramic fibre reinforced composition was easily injection moulded and cycle times of about 5.0 seconds were achieved. Attempts were made to injection mould the pellets of the glass reinforced composition but because of excessive viscosity of the compositions the attempts were unsuccessful.

## Claims

1. Reinforced thermoplastic composites, characterized by comprising a linear alternating polymer of at least one olefinically unsaturated compound and carbon monoxide, and an inorganic fibrous reinforcement.

2. A composite as claimed in claim 1, characterized in that the polymer is an ethene/carbon monoxide copolymer or an ethene/propene/carbon monoxide terpolymer having an ethene to propene molar ratio of at least 3:1.

3. A composite as claimed in claims 1 or 2, characterized in that the polymer has a LVN at 60 °C of at least 2 dl/g.

4. A composite as claimed in any of claims 1-3, characterized in that the inorganic fibrous reinforcement is selected from the group comprising glass, ceramic and carbon based fibrous reinforcements.

5. Process for the preparation of reinforced thermoplastic composites, characterized in that an inorganic fibrous reinforcement is contacted with a solution of a linear alternating copolymer of at least one olefinically unsaturated compound and carbon monoxide, and that subsequently the solvent component is removed the thus treated fibrous reinforcement.

6. A process as claimed in claim 5, characterized in that the polymer solution has a viscosity in the range of from 0.5 to 10 Pa.s when contacted with the fibrous reinforcement.

7. A process as claimed in claim 6, characterized in that the viscosity is in the range from 1 to 4 Pa.s.

8. A process as claimed in any of claims 5-7, characterized in that the solvent component of the polymer solution is hexafluoroisopropanol, m-cresol or a mixture thereof.

9. A process as claimed in any of claims 5-8, characterized in that the solvent fraction of the polymer solution includes a minor amount of a non-solvent relative to that of the solvent component.

10. A process as claimed in any of claims 5-9, characterized in that the solvent is removed by extraction with the aid of a suitable extracting agent.